# EUROPÄISCHE PATENTANMELDUNG

(11) **EP 3 460 598 A1**
(43) Veröffentlichungstag der Anmeldung: **27.03.2019**
(21) Anmeldenummer: 17192679.3
(22) Anmeldetag: 22.09.2017
(51) Int. Cl.: G05B 19/042

(54) **SPEICHERPROGRAMMIERBARE STEUERUNG**

(71) Anmelder: Siemens Aktiengesellschaft, 80333 München (DE)
(72) Erfinder: Ermler, Rene, 91058 Erlangen (DE); Neidig, Jörg, 90419 Nürnberg (DE)

(57) **Zusammenfassung**

Eine Engineeringeinrichtung (1) einer speicherprogrammierbaren Steuerung (6), weist einen Speicher (7) und eine Benutzerschnittstelle (10) auf, wobei die Benutzerschnittstelle (10) der Engineeringeinrichtung (1) eine Benutzerschnittstelle (11) einer Betriebseinrichtung (4) der speicherprogrammierbaren Steuerung (6) repräsentiert. Zum Betrieb der speicherprogrammierbaren Steuerung (6), wird zur Programmierung die Engineeringeinrichtung (1) und die Programmiereinrichtung (2) verwendet. Ferner wird eine Cloudeinrichtung (3) verwendet, wobei die Cloudeinrichtung (3) mittels der Engineeringeinrichtung (1) aktiviert ist.

## Beschreibung

Die Erfindung betrifft eine speicherprogrammierbare Steuerung (SPS).

Speicherprogrammierbare Steuerungen werden beispielsweise zur Steuerung und/oder Regelung von Prozessen, Anlagen (z.B. eine Produktionsanlage, eine Überwachungsanlage, etc.), Maschinen, Gebäuden (Gebäudeautomatisierung) etc. eingesetzt. Zur Programmierung und Parametrierung speicherprogrammierbarer Steuerungen kann ein Engineeringsystem verwendet werden. Neben einem Engineeringsystem kann die speicherprogrammierbare Steuerung auch ein Simulationsprogramm aufweisen. Das Simulationsprogramm dient beispielsweise zur Berechnung einer virtuellen Sensorik. Speicherprogrammierbare Steuerungen, oft als SPS abgekürzt, dienen z.B. zur Steuerung einfacher und komplexer Anlagen, beispielsweise zur Produktion von Gütern. Die SPS steuert und/oder regelt beispielsweise Motoren einer Anlage und/oder es werden insbesondere Daten von Sensoren empfangen, welche den Zustand einer Anlage beschreiben.

Die SPS ist insbesondere am Ort der zu vollziehenden Aufgabe lokalisiert. Auch die Programmierung und/oder Parametrierung erfolgt in der Regel am Einsatzort der SPS. Dieser Ansatz ist unflexibel.

Eine Aufgabe der Erfindung ist es die Flexibilität bei einer Speicherprogrammierbaren Steuerung zu erhöhen.

Einer Lösung dieser Aufgabe ergibt sich durch eine Engineeringeinrichtung nach Anspruch 1, eine speicherprogrammierbare Steuerung nach Anspruch 6 und durch ein Verfahren zum Betrieb einer speicherprogrammierbaren Steuerung nach Anspruch 10. Ausgestaltungen ergeben sich beispielsweis nach den Ansprüchen 2 bis 5, 7 bis 9 und 11 bis 15.

Eine Engineeringeinrichtung einer speicherprogrammierbaren Steuerung (SPS), weist einen Speicher und eine Benutzerschnittstelle auf, wobei die Benutzerschnittstelle der Engineeringeinrichtung eine Benutzerschnittstelle einer Betriebseinrichtung der SPS repräsentiert. Die Engineeringeinrichtung kann auch als zumindest ein Teil eines Engineeringsystems bezeichnet werden. Die Engineeringeinrichtung dient insbesondere der Programmierung und/oder Parametrierung der SPS. Die Benutzerschnittstelle der Engineeringeinrichtung ist insbesondere ein Display und/oder eine LED und/oder ein Schalter bzw. jeweils eine Vielzahl derer. Neben der Engineeringeinrichtung weist die SPS auch eine Betriebseinrichtung auf. Im Betrieb der SPS ist die Engineeringeinrichtung insbesondere von der Betriebseinrichtung der SPS räumlich beabstandet. Dies können Meter oder hunderte bzw. tausende von Kilometern sein. Die Betriebseinrichtung der SPS ist dort lokalisiert, wo der Einsatzort zur Steuerung und/oder Regelung eines Prozesses, einer Anlage, einer Maschine, eines Gebäudes (Gebäudeautomatisierung), etc. ist. Die Engineeringeinrichtung ist insbesondere zur Nutzung durch einen Inbetriebsetzer, einem Programmierer, einem Maschinenführer, etc. vorgesehen. Auch die Betriebseinrichtung weist eine Benutzerschnittstelle auf, wie z.B. ein Display und/oder eine LED und/oder ein Schalter bzw. jeweils eine Vielzahl derer. Zumindest ein Teil der Benutzerschnittstellen von Engineeringeinrichtung und Betriebseinrichtung sind gleich. So kann sich z.B. ein Anwender der Engineeringeinrichtung die gleichen Ausgaben an der Benutzerschnittstelle der Engineeringeinrichtung ausgeben lassen, wie dies bei der Benutzerschnittstelle der Betriebseinrichtung wäre. Die Engineeringeinrichtung dient also als eine Art Repräsentant der Betriebseinrichtung. Die Betriebseinrichtung weist insbesondere eine Eingabeschnittstelle und/oder eine Ausgabeschnittstelle zur Steuerung und oder Regelung auf. Über die Ausgabeschnittstelle können beispielsweise Motoren, Schalter und/oder Ventile angesteuert bzw. geregelt werden. Über die Eingabeschnittstelle können beispielsweise Informationen bezüglich der Stellung von Aktoren der Anlage und/oder Betriebsdaten der elektrischen Maschinen, der Anlage und/oder der Sensoren empfangen werden.

Die Engineeringeinrichtung ist nicht, bzw. nicht primär, zur Steuerung und/oder Regelung von Prozessen, Anlagen, Maschinen, Gebäuden (Gebäudeautomatisierung) etc. vorgesehen und weist insbesondere hierfür keine Eingabeschnittstelle und/oder eine Ausgabeschnittstelle auf. Automatisierungsaufgaben können ganz oder teilweise in die Cloud verlagert werden. Über die Cloud kann IT-Infrastruktur wie beispielsweise Speicherplatz, Rechenleistung oder Anwendungssoftware über das Internet bereitgestellt werden. Hierfür kann beispielsweise ein Rechenzentrum oder eine Vielzahl von Rechenzentren und/oder eine Vielzahl von Einzelrechnern verwendet werden. Insbesondere wird durch das Cloud Computing IT-Infrastruktur über ein Rechnernetz zur Verfügung gestellt, ohne dass diese lokal vorhanden sein muss. So kann in der Automatisierungstechnik ein sogenannter Cloud-Service bzw. ein Software-as-a-Service genutzt werden. Insbesondere bei zeitunkritischen Prozessen (wie Gebäudeautomatisierung) bzw. Aufgaben, können Regelungsaufgaben in ein Rechenzentrum in der Cloud verlagert werden. Die Verlagerung erfolgt also in eine Einrichtung in der Cloud, also in eine Cloudeinrichtung, wie z.B. ein Rechenzentrum. Was zeitunkritisch ist hängt dabei sowohl von der Kommunikationsverbindung ab (sichere Übertragungsgeschwindigkeit, sichere Bandbreite, etc.), wie auch von den Anforderungen (Automatisierung eines Gebäudes, einer Papiermaschine, einer Werkzeugmaschine, eines Schiffes, etc.). Kann also eine sichere Verbindung bezüglich Zeit und/oder Datenmenge sichergestellt werden, können auch zeitkritische Aufgaben in die Cloud verlagert werden. Von gelegentlichen Ausnahmen wie Migration der Rechenprozesse im Rechenzentrum und/oder Netzwerkproblemen abgesehen kann die Latenz einer Steuerung und/oder Regelung im zweistelligen Millisekunden Bereich liegen. Die Sensoren und Aktoren sind weiterhin lokal vorhanden und mit geeigneten Netzwerkmechanismen mit dem Automatisierungsgerät, der Betriebseinrichtung, verbunden.

Für die Programmierung derartiger Systeme kommen verschiedene Methoden in Betracht. Zum einen kann die Engineeringsoftware ebenfalls an einem Server im Rechenzentrum ausgeführt werden. Die Benutzung der Software erfolgt im Webbrowser und/oder mithilfe einer Screen-Sharing-Technik, z.B. auf Basis von Remote-Desktop oder ähnlichen Protokollen. Zum anderen kann die Engineeringsoftware lokal auf einem Entwicklungsrechner installiert sein, wobei das gesamte Steuerungsprogramm und/oder einzelne Bausteine unter Zuhilfenahme von Netzwerkmechanismen in die Cloud-SPS übertragen werden. Dabei kann es vorkommen, dass die Cloud-SPS nur als Prozess im Rechenzentrum existiert. Ein physisches Gerät mit Display, Schalter, Speicherslot, welches eine Rückmeldung über den aktuellen Zustand des Cloudprozesses gibt, existiert in dieser Ausgestaltung nicht physisch, bzw. existiert lediglich als PC-Applikation. Hierfür ist eine Internetverbindung notwendig. Eine Offlineuntersuchung oder eine Offlineentwicklung des Automatisierungsprogramms ist nicht möglich, wenn dieses nur in der Cloud abgelegt ist und die Cloud nicht erreichbar ist. Sind die Programmdaten der SPS nur in der Cloud, kann eine lokale Installation von Software (Engineeringsystem, Remote-Desktop Software, VPN-Tunnel, ...) dennoch notwendig sein, obwohl eine Cloud-SPS, also eine SPS deren Funktionalität und Rechenleistung in der Cloud realisiert ist, prinzipiell universell im Internet erreichbar sein kann. Ein Engineeringsystem kann beispielsweise lokal auf einen Rechner (z.B. einen Personal Computer, einem Smartphone, einem Tablet, etc.) installiert sein und/oder in der Cloud. Hierbei kann zwingend eine Authorisierung am Cloud-SPS-System vorgesehen sein, welche beispielsweise Logindaten und/oder Kryptografisches Material aufweist bzw. aus diesem besteht. Lösungen, die ohne lokale Installation von Anwendungen oder mobilen Apps auskommen sind insbesondere Web-basiert und werden im Browser ausgeführt. Der Quellcode des Automatisierungsprogramms (bzw. dessen Logik oder Regeln) kann bei solchen Lösungen im Rechenzentrum, also in der Cloud, gespeichert werden oder zur Übersetzung dahin übertragen werden. Bei diesen reinen Cloud-Lösungen gibt es beim Engineering, lokal getrennt vom Standort der Automatisierung, keine Verbindung zwischen dem virtuellen Rechenprozess in der Cloud (z.B. in einem Rechenzentrum) und einem lokalen, physischen Gerät mit Display, Schalter, etc. am Ort des Engineerings.

Durch die Engineeringeinrichtung der SPS, welche zumindest einen Speicher und zumindest eine Benutzerschnittstelle aufweist, ist ein physisches Gerät in einem Gehäuse am Ort des Engineerings, lokal distanziert vom Ort der Automatisierung wo die Betriebseinrichtung ist, realisierbar, welche insbesondere ein Display, einen Schalter, etc. aufweist.

In einer Ausgestaltung der Engineeringeinrichtung weist diese einen Speicher (Datenspeicher) zum Speichern von Daten auf. Durch das Gerät der Engineeringeinrichtung ist also eine Speichermöglichkeit z.B. für Daten und/oder Dateien geschaffen, welche z.B. mit den Funktionen eines Security Token und physischen Elementen wie Display und Schaltern kombiniert werden können. Der Security Token, welcher in der Engineeringeinrichtung bespeichert ist, kann beispielsweise zur in der Cloud realisierten SPS (Cloud-SPS) übertragen werden, um dort z.B. Funktionen freizuschalten.

In einer Ausgestaltung der Engineeringeinrichtung weist diese einen Sicherheitsschlüssel auf. Der Security Token ist ein Sicherheitsschlüssel. Die Security Token Funktion führt insbesondere einen kryptographischen Algorithmus aus und speichert sicher das Schlüsselmaterial. Weist die Engineeringeinrichtung die "Sicherheit" selbst auf, so kann diese nicht mehr verloren gehen. Bei einem rein softwarebasierten Zugang wie bei einem webbasierten Engineeringsystem und/oder einer reinen Cloud-SPS kann die Autorisierung (Passwort, Login, Schlüssel, ...) vergessen werden, verloren gehen und/oder in betrügerischer Absicht unbemerkt kopiert oder an Unbefugte weitergegeben werden. Ist die Autorisierung an das physische Gerät der Engineeringeinrichtung gekoppelt, so kann dieses Problem minimiert werden. Der Anforderung, Schlüsselmaterial sicher zu speichern und Funktionalität zu lizensieren kommen Lösungen mit Hardware-Dongles am nächsten. Diese sind z.B. als Chipkarten oder USB-Geräte realisiert und kommunizieren verschlüsselt z.B. mit einem Server, um Zugang zu Prozessen zu autorisieren oder Funktionen freizuschalten.

In einer Ausgestaltung der Engineeringeinrichtung weist diese ein Engineeringprogramm auf. Das Engineeringprogramm ist insbesondere auf dem Datenspeicher gespeichert. Im Datenspeicher können sowohl die Engineeringsoftware (i.S.v. Anwendungsprogramm), als auch dessen vollständige Konfiguration hinterlegt sein. Die Konfiguration kann unter anderem, Lizenzen, Projektdaten, Versionierungsstände, Zugangsdaten zur Cloudinfrastruktur und weiteres umfassen.

In einer Ausgestaltung der Engineeringeinrichtung, weist diese Projektdaten, wie z.B. einen Programmcode auf. Der Programmcode kann auch in der Cloud gespeichert sein und/oder zumindest zur Übersetzung dahin übertragen werden. Zum Schutz kann dies verschlüsselt erfolgen.

In einer Ausgestaltung der Engineeringeinrichtung weist diese eine Datenschnittstelle zum Anschluss einer Programmiereinrichtung auf. Die Programmiereinrichtung ist beispielsweise ein Programmiergerät, ein Engineering-PC, ein Smartphone mit einer Programmier-App, ein Tablet mit einer Programmier-App, etc. Die Programmiereinrichtung weist insbesondere eine Netzwerkschnittstelle bzw. eine Kommunikationsschnittstelle für eine Datenverbindung mit dem Internet und demnach mit der Cloud auf. Die Cloud ist im Internet bzw. über das Internet erreichbar.

In einer Ausgestaltung der Engineeringeinrichtung weist diese ein Display und/oder ein Bedienelemente auf und erweckt damit den Anschein eines Automatisierungsgerätes, aber die in der Engineeringeinrichtung erstellten Programme werden nicht auf diesem Gerät ausgeführt. Stattdessen wird die Rechenkapazität in der Cloud genutzt. Es liegt damit eine Cloud-SPS vor. Die Cloud weist insbesondere ein Rechenzentrum auf. In der Cloud-SPS wird bei Bedarf ein Prozess gestartet, der das Automatisierungsprogramm ausführt.

Eine Speicherprogrammierbare Steuerung ist derart ausgestaltbar, dass diese eine Engineeringeinrichtung, beispielsweise wie obig beschrieben und eine Programmiereinrichtung, beispielsweise wie obig beschrieben aufweist. Die Engineeringeinrichtung und die Programmiereinrichtung sind zwei unterschiedliche Geräte, welche insbesondere jeweils ein eigenes Gehäuse aufweisen. Die Programmiereinrichtung weist insbesondere ein Display und eine Tastatur bzw. eine Einrichtung zur Bewegung eines Cursers bzw. zur Bewegung eines Mauszeigers auf. Das Display der Programmiereinrichtung kann auch als Anzeigeeinrichtung für die Engineeringeinrichtung genutzt werden.

In einer Ausgestaltung der speicherprogrammierbaren Steuerung weist diese eine Cloudeinrichtung auf. Die Cloudeinrichtung ist beispielsweise eine Cloud-SPS, welche insbesondere in einem Rechenzentrum in der Cloud realisiert werden kann.

In einer Ausgestaltung der speicherprogrammierbaren Steuerung weist dies eine Betriebseinrichtung auf. Die Betriebseinrichtung der SPS ist dort lokalisiert, wo der Einsatzort zur Steuerung und/oder Regelung eines Prozesses, einer Anlage, einer Maschine, eines Gebäudes (Gebäudeautomatisierung), etc. ist. Die Betriebseinrichtung weist insbesondere I/O-Schnittstellen auf.

Durch die Ausgestaltung der speicherprogrammierbaren Steuerung können Probleme der Installation, Sicherheit und/oder Visualisierung gelöst werden. Dies gelingt insbesondere durch die Verwendung einer separaten Engineeringeinrichtung. In einer Ausgestaltung wird das Engineering als eine portable Applikation in einem Massenspeicher abgelegt. Die Ablage der Applikations- und/oder Projektdaten erfolgt durch eine Implementation eines USB-Massenspeichers.

Bei einem Verfahren zum Betrieb einer speicherprogrammierbaren Steuerung wird zur Programmierung eine Engineeringeinrichtung und eine Programmiereinrichtung verwendet. Dies macht das System sowohl sicher, wie auch flexibel und kann einem Anwender das Gefühl geben mit der Engineeringeinrichtung lokal eine SPS zu programmieren bzw. zu parametrieren.

In einer Ausgestaltung des Verfahrens wird eine Cloudeinrichtung verwendet. Die Cloudeinrichtung ist insbesondere eine Cloud-SPS, auf welcher die von einer SPS durchzuführenden Rechenvorgänge durchgeführt werden.

In einer Ausgestaltung des Verfahrens wird eine erste Datenverbindung zwischen der Engineeringeinrichtung und der Programmiereinrichtung ausgebildet und eine zweite Datenverbindung zwischen der Programmiereinrichtung und der Cloudeinrichtung, wobei insbesondere eine dritte Datenverbindung zwischen der Cloudeinrichtung und einer Betriebseinrichtung ausgebildet wird. So kann auch die Engineeringeinrichtung mit der Cloudeinrichtung kommunizieren und Daten austauschen. Diese Daten betreffen insbesondere eine Authentifizierung bzw. eine Freischaltung von Funktionen auf der Cloud-SPS. So können mit dem Kauf der Engineeringeinrichtung Softwarefunktionen mit gekauft werden, was in der Engineeringeinrichtung hinterlegt wird und durch die Engineeringeinrichtung auf der Cloud-SPS freigeschaltet wird.

Die Engineeringeinrichtung kann als physische Repräsentation eines Cloud-Prozesses in einem Rechenzentrum verstanden werden. Wird beispielsweise das Gerät, also die Engineeringeinrichtung, mit einem PC, also einer Programmiereinrichtung, verbunden, wird das Engineering System ohne vorherigen Installationsprozess gestartet, der Benutzer des Gerätes kann sofort damit arbeiten. Alle notwendigen Projektdateien werden vom Gerät geladen und auch wieder dorthin gespeichert. Ein Arbeitsplatzwechsel oder eine Weitergabe des Geräts an andere Personen ist einfach möglich. Das Gerät, also die Engineeringeinrichtung, stellt den Zustand des Automatisierungssystems dar und ermöglicht dessen Bedienung. Die Rechenkapazität zur Ausführung wird aber auf ein zentrales Computersystem in der Cloud, die Cloudeinrichtung, ausgelagert.

In einer Ausgestaltung des Verfahrens wird ein Sicherheitsschlüssel von der Engineeringeinrichtung zu Programmiereinrichtung übertragen. Dies ist mit einer Security Token Funktion realisierbar. Die Security Token Funktion in der Engineeringeinrichtung erlaubt eine sichere Authentifizierung und stellt Kopierschutz und Manipulationssicherheit dar, indem dem Authentication Prozess in der Cloudeinrichtung (z.B. einem Rechenzentrum) die Identität bzw. das Vorhandensein des Gerätes nachgewiesen wird. Der Cloud-SPS-Prozess in der Cloudeinrichtung wird (wenn nötig) gestartet und dem Engineering System der Zugriff auf den Prozess jedoch erst gegeben, nachdem der Prozess der Authentisierung erfolgreich abgeschlossen wurde. Mit einer Authentifizierung, sicherer Speicherung und/oder Identifizierung können Engineeringeinrichtungen personalisiert werden, so das eine Lizenzierung, die dezentral auf dem Gerät gespeichert ist die Funktionalität und das Verhalten des Cloud-Prozesses vorgeben kann. Die Lizenz auf der lokalen Engineeringeinrichtung steuert welche Eigenschaften (i.S.v. Ressourcen, Funktionen oder zugesicherter Servicequalität) dem Prozess (d.h. der Rechenfunktionalität) in der Cloud zugeteilt werden.

In einer Ausgestaltung des Verfahrens wird die Cloudeinrichtung, also insbesondere die Cloud-SPS, mittels der Engineeringeinrichtung aktiviert. Dies ermöglicht ein einfaches Lizenzregime.

In einer Ausgestaltung des Verfahrens wird ein Engineeringprogramm auf der Engineeringeinrichtung gespeichert und auf der Programmiereinrichtung ausgeführt. So benötigt die Engineeringeinrichtung wenig Rechenleistung und kann Rechenleistung der Programmiereinrichtung nutzen.

In einer Ausgestaltung des Verfahrens wird eine bidirektionale Netzwerkverbindung verwendet, die durch das Engineeringsystem, welches durch das Engineeringprogramm realisierbar ist, verwaltet wird und dazu dient die Aktionen der Bedienelemente an der Engineeringeinrichtung an die Cloud-SPS, also die Cloudeinrichtung, weiterzugeben und deren Zustand am Display des Geräts der Engineeringeinrichtung auszugeben. Cloud-SPS und Engineering System unterstützen das Verfahren. Die Bedienelemente der Engineeringeinrichtung können entweder einzelne USB-Devices repräsentieren oder durch einen unterstützenden Prozess im Gerät angesprochen werden. Das Engineering System verbindet dazu den Authentication-Prozess in der Cloudeinrichtung und die Security Token Funktionalität transparent. Als Protokolle können TOTP (Time-based One-time Password Algorithmen) oder asymmetrische Kryptographie (z.B. RSA) zum Einsatz kommen. In beiden Fällen wird Kryptographisches Material im Speicherbereich des Token hinterlegt. Es verlässt niemals das Security Token und kann damit nicht trivial kopiert werden. Eine Authentisierung des Servers kann auf die gleiche Weise implementiert werden. Eine Transportverschlüsselung kann durch das SSL-Verfahren erreicht werden. Eine Beschränkung des Zugriffs kann entweder auf Betriebssystemebene, z.B., durch Firewalltechnik oder auf Applikationsebene durch ein Authentisierungstoken, z.B. OpenID erfolgen. Eine erfolgreiche Authentifizierung zeigt das Vorhandensein einer Engineeringeinrichtung an. Gewünschte Eigenschaften der Cloud-SPS werden z.B. in einer Lizenzdatei hinterlegt, die in den Speicherbereich der Engineeringeinrichtung hinterlegt wird. Die Integrität der Lizenzdatei gewinnt man z.B. durch eine kryptographische Signatur, mit dem Schlüsselmaterial des Cloudproviders oder durch die Bindung an ein Geheimnis (Shared Secret) im Speicherbereich des Security Token (HMAC, Hash based message Authentication Code).

Für eine SPS ist auch ein webbasiertes oder portables Engineeringsystem möglich und/oder eine donglebasierte Authentifizierung und/oder Hardware zur Ausgabe des Zustandes und/oder zum Anschluss zumindest eines Bedienelementes.

Im Folgenden wird die Erfindung anhand einer Figur beispielhaft näher erläutert.

Die Darstellung zeigt eine Engineeringeinrichtung 1. Die Engineeringeinrichtung 1, welche auch als virtuelle SPS zum Engineering bezeichnet werden kann, weist einen Speicher 7 eine Benutzerschnittstelle 10 und einen Sicherheitsschlüssel 12 auf. Der Speicher 7 weist ein Engineeringprogramm 8 und weitere Daten 9 auf. Das Engineeringprogramm 8 ist insbesondere auf einer Programmiereinrichtung 2, welche auch als Engineering PC bezeichnet werden kann ablauffähig. Die weiteren Daten 9 sind beispielsweise Projektdaten, Quelldaten, Lizenzdaten, Schlüsseldaten, etc. Die Benutzerschnittstelle 10 weist beispielsweise ein Display auf, einen Schalter, eine LED, etc. Die Engineeringeinrichtung weist einen Sicherheitsschlüssel 12 auf, der sicher zur Programmiereinrichtung 2 übertragen werden kann. Die Engineeringeinrichtung 1 weist eine Datenschnittstelle 27 auf. Über diese Datenschnittstelle 27 läuft eine erste Datenverbindung 13 zu der Programmiereinrichtung 2. Über die erste Datenverbindung 13 können Sicherheitsdaten 16, wie der Sicherheitsschlüssel 12, Benutzerschnittstellendaten 19 und/oder Speicherdaten 20 übertragen werden. Speicherdaten 20 sind beispielsweise Daten, welche aus dem Speicher 7 geladen, gelesen, geschrieben und/oder ausgeführt werden.

Die Programmiereinrichtung 2 weist das ausführbare Engineeringprogramm 8 auf. Das Engineeringprogramm 8 wird auf der Programmiereinrichtung 2 ausgeführt, welche auch einen Bildschirm 31 aufweist. Daten des Engineeringprogramms 8 werden über eine Netzwerkschnittstelle 23 zu einer Cloudeinrichtung 3 über eine zweite Datenverbindung 14 übertragen. Die Cloudeinrichtung 3 befindet sich in der Cloud, also im Internet 32. Über die zweite Datenverbindung 14 werden Benutzerschnittstellendaten 19, Engineeringdaten 21 und Sicherheitsdaten 17 übertragen. Die Cloudeinrichtung 3 weist eine Cloud SPS 24 auf. Durch einen Authentifizierungsprozess 26 kann über eine Freigabe 25 die Cloud SPS 24 gestartet werden.

Eine dritte Datenverbindung 15 verbindet die Cloudeinrichtung 3 mit der Betriebseinrichtung 4. Die dritte Datenverbindung 15 weist SPS-Daten 22, Benutzerschnittstellendaten 19 und Sicherheitsdaten 18 auf. Die Betriebseinrichtung weist eine eigene Benutzerschnittstelle 11 auf. Die Betriebseinrichtung 4 ist in eine Anlage 5 integriert. Die Anlage 5 weist Motoren 28, Schalter 29, Ventile 30, etc. auf. Diese Elemente können über die Betriebseinrichtung 4 gesteuert und/oder geregelt werden. Hierfür sind Steuerungsdaten 33 vorgesehen.

Das separate Gerät der Engineeringeinrichtung 1 kann mehrere ansonsten unabhängige Methoden zu einer Einheit kombinieren. Im Ergebnis ergibt sich ein Objekt, welches für einen Anwender beispielhaft folgende Vorteile haben kann:
- eine einfache Benutzung;
- keine Probleme mit Lizenzen, für die SPS, da bereits in der Engineeringeinrichtung 1 enthalten;
- keine Installation und Konfiguration des Engineering Systems nötig, da es sich beim Engineeringprogramm um eine portable Software handelt, die direkt von der Engineeringeinrichtung gestartet werden kann, wobei eine Lizenz bereits enthalten sein kann;
- der Typ des Automatisierungsgeräts kann voreingestellt bzw. an die Lizenz gekoppelt werden;
- Keine Konfiguration, oder zusätzliche Passwörter für Cloud-Dienste erforderlich;
- Durch die Verwendung von starker Authentifizierung bereits bei erster Benutzung sicher;
- Fehlkonfiguration und Fehlbedienung können weitgehend ausgeschlossen werden;
- Know-How-Schutz für den Anwender, da Projektdaten lokal in der Engineeringeinrichtung gespeichert sind;
- Know-How-Schutz für den Anwender, da der Sourcecode nicht prinzipbedingt in der Cloud gespeichert werden muss;
- Know-How-Schutz für den Anwender, da nur der übersetzte SPS-Code auf die Cloud-SPS übertragen wird;
- Die Engineeringeinrichtung 1 ist aus einer kostengünstigen Hardware fertigbar, da sie keine aufwändige SPS darstellt, sondern nur ein einfaches Gerät mit Speicher und/oder LED-Display und/oder LEDs;
- Know-How-Schutz für einen SPS-Hersteller, da der Anwender die Firmware des Automatisierungsgerätes, also der SPS, zur Ausführung des Codes nicht benötigt;
- Bessere Skalierbarkeit, Ressourcennutzung und/oder Fehlerbehebungsmöglichkeit bei Fehlern im SPSCode, da alle Prozesse im Rechenzentrum in der Cloud laufen;
- Sichere Lizensierung, da die Engineeringeinrichtung 1 auch als Dongle funktioniert, der nicht kopiert werden kann;
- Einfache Migrationslösung für Anwender, die der Cloud-Technik eher skeptisch gegenüberstehen, da der Anwender Daten und Sourcecode nicht aus der Hand geben muss, da es mit der Engineeringeinrichtung 1 ein "echtes" Gerät (Hardware) gibt und nicht nur einen Software-Prozess in der Cloud (Rechenzentrum).

Die Engineeringeinrichtung 1 kann durch ihre Ausführung als Hardwaregerät einen lokalen Repräsentanten für eine virtualisierte SPS in einem Rechenzentrum (Cloud) darstellen. Die Engineeringeinrichtung kann Bedienteil, Speicherfunktion und Dongletechnologie vereinen um dann damit eine Cloud-SPS programmieren zu können. Die Engineeringeinrichtung ist derart ausgestaltbar, dass keine Installation des Engineeringsystems bzw. des Engineeringprogramms nötig ist. Das Engineeringprogramm kann als eine portable Software ausgeführt sein, so dass diese direkt vom Gerät (Engineeringeinrichtung) gestartet werden kann um eine Visualisierung des Zustands und eine Bedienung der Cloud-SPS am Gerät zu ermöglichen. Es ist eine sichere und konfigurationslose Verbindung zur Cloud-SPS (Zugangsdaten, Passwörter, Cryptoschlüssel usw. sind auf dem Gerät (Engineeringeinrichtung 1)) möglich. Auch eine Weitergabe, ein Weiterverkauf der Engineeringeinrichtung 1 ist möglich, wobei ein Duplizieren wie bei einer Softwarelösung nicht möglich ist. Die Engineeringeinrichtung 1 ist als Hardwaregerät mit einem Cloudprozess verbindbar, wobei eine sichere und beidseitig authentifizierte Verbindung von Engineeringsystem bzw. Engineeringprogramm und virtualisierter SPS (Cloud SPS) sichergestellt werden kann.

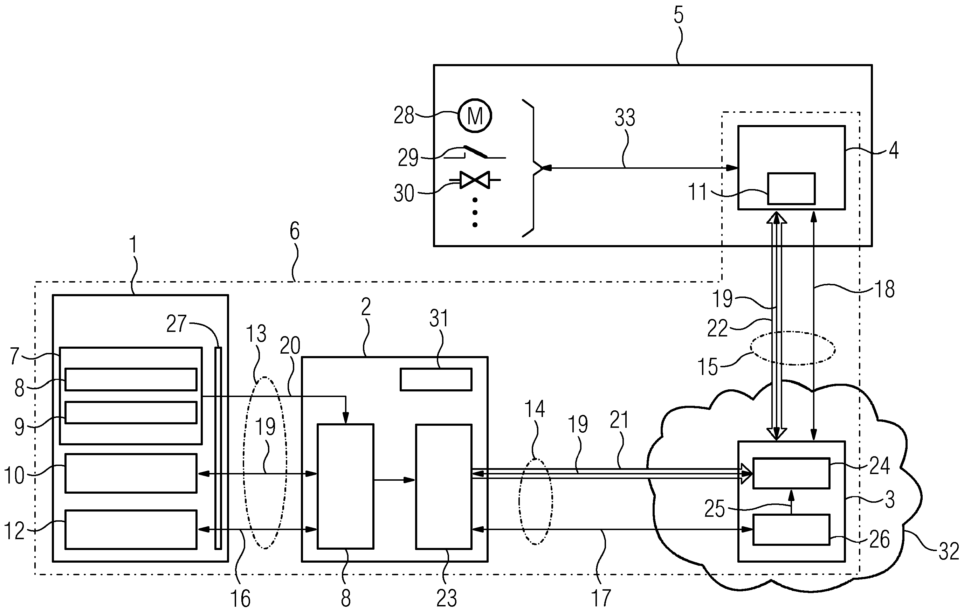

## Patentansprüche

1. Engineeringeinrichtung (1) einer speicherprogrammierbaren Steuerung (6), welche einen Speicher (7) und eine Benutzerschnittstelle (10) aufweist, wobei die Benutzerschnittstelle (10) der Engineeringeinrichtung (1) eine Benutzerschnittstelle (11) einer Betriebseinrichtung (4) der speicherprogrammierbaren Steuerung (6) repräsentiert.

2. Engineeringeinrichtung (1) nach Anspruch 1, welche einen Sicherheitsschlüssel (12) aufweist.

3. Engineeringeinrichtung (1) nach Anspruch 1 oder 2, welche ein Engineeringprogramm (8) aufweist.

4. Engineeringeinrichtung (1) nach einem der Ansprüche 1 bis 3, welche Projektdaten (9) aufweist.

5. Engineeringeinrichtung (1) nach einem der Ansprüche 1 bis 4, welche eine Datenschnittstelle (27) zum Anschluss einer Programmiereinrichtung (2) aufweist.

6. Speicherprogrammierbare Steuerung (6), welche eine Engineeringeinrichtung (1) und eine Programmiereinrichtung (2) aufweist.

7. Speicherprogrammierbare Steuerung (6) nach Anspruch 6, welche eine Cloudeinrichtung (3) aufweist.

8. Speicherprogrammierbare Steuerung (6) nach Anspruch 6 oder 7, welche eine Betriebseinrichtung (4) aufweist.

9. Speicherprogrammierbare Steuerung (6) nach einem der Ansprüche 6 bis 8, wobei die Engineeringeinrichtung (1) eine Engineeringeinrichtung (1) nach einem der Ansprüche 1 bis 5 ist.

10. Verfahren zum Betrieb einer speicherprogrammierbaren Steuerung (6), wobei zur Programmierung eine Engineeringeinrichtung (1) und eine Programmiereinrichtung (2) verwendet wird.

11. Verfahren nach Anspruch 10, wobei eine Cloudeinrichtung (3) verwendet wird.

12. Verfahren nach Anspruch 10 oder 11, wobei eine erste Datenverbindung (13) zwischen der Engeneeringeinrichtung (1) und der Programmiereinrichtung (2) ausgebildet ist und eine zweite Datenverbindung (14) zwischen der Programmiereinrichtung (2) und der Cloudeinrichtung (3) ausgebildet ist, wobei insbesondere eine dritte Datenverbindung (15) zwischen der Cloudeinrichtung (3) und einer Betriebseinrichtung (4) ausgebildet ist.

13. Verfahren nach einem der Ansprüche 10 bis 12, wobei ein Sicherheitsschlüssel (12) von der Engineeringeinrichtung (1) zu Programmiereinrichtung (2) übertragen wird.

14. Verfahren nach einem der Ansprüche 10 bis 13, wobei die Cloudeinrichtung (3) mittels der Engineeringeinrichtung (1) aktiviert wird.

15. Verfahren nach einem der Ansprüche 10 bis 14, wobei ein Engineeringprogramm (1) auf der Engineeringeinrichtung (1) gespeichert ist und auf der Programmiereinrichtung (2) ausgeführt wird.
